# EUROPÄISCHE PATENTANMELDUNG

(11) **EP 4 458 533 A1**
(43) Veröffentlichungstag der Anmeldung: **06.11.2024**
(21) Anmeldenummer: 24162596.1
(22) Anmeldetag: 11.03.2024
(51) Int. Cl.: B25J 21/00, B65B 41/06, B65B 17/02, B65B 57/00, F16P 3/08, B65B 43/14, B65B 43/44

(54) **VERPACKUNGSVORRICHTUNG ZUR HERSTELLUNG VON VERPACKUNGSEINHEITEN UND VERFAHREN ZUR VERSORGUNG EINER SOLCHEN VERPACKUNGSVORRICHTUNG MIT VERPACKUNGSZUSCHNITTEN**

(30) Priorität: 03.05.2023 DE 102023111455
(71) Anmelder: Krones Aktiengesellschaft, 93073 Neutraubling (DE)
(72) Erfinder: KREIS, Marcus, 93073 Neutraubling (DE); SCHREMS, Rudolf, 93073 Neutraubling (DE); SPINDLER, Herbert, 93073 Neutraubling (DE); TRIFFO, Andreas, 93073 Neutraubling (DE)
(74) Vertreter: Benninger, Johannes

(57) **Zusammenfassung**

Es sind eine Verpackungsvorrichtung (10) und ein Verfahren zur Versorgung einer solchen Verpackungsvorrichtung (10) mit Verpackungszuschnitten offenbart.

Mit den Verpackungszuschnitten werden Verpackungseinheiten hergestellt, indem die Verpackungszuschnitte mittels eines Handhabungsroboters (20, 40) auf gruppierte Artikel appliziert werden.

Der Handhabungsroboter (20, 40) greift auf wenigstens zwei in Reichweite eines beweglichen Werkzeugkopfes (18) befindliche Teilmagazine (14, 16) eines Magazins (12) mit jeweils darin bereitgehaltenen Verpackungszuschnitten zu. Die Verpackungszuschnitte werden mittels des Handhabungsroboters (20, 40) aus dem Magazin (12) entnommen und an jeweils bereitstehende Artikelgruppierungen appliziert. Eines der Teilmagazine (14, 16) des Magazins (12) ist zur Wiederbefüllung nach einer Entnahme der dort verfügbar gehaltenen Verpackungszuschnitte unter Weiternutzung des jeweils anderen Teilmagazins (16 bzw. 14) zumindest teilweise aus einer Betriebsposition (22), insbesondere aus der Verpackungsvorrichtung (10) entnehmbar.

Das jeweils aus der Betriebsposition (22), insbesondere aus der Verpackungsvorrichtung (10) entnommene Teilmagazin (14, 16) und/oder der betreffende Magazinplatz (24, 28) zumindest temporär ist/sind mittels einer beweglichen Barriere (30) vom Werkzeugkopf (18) des Handhabungsroboters (20, 40) abschirmbar.

## Beschreibung

Die vorliegende Erfindung betrifft eine Verpackungsvorrichtung zur Herstellung von Verpackungseinheiten sowie ein Verfahren zur Versorgung einer Verpackungsvorrichtung mit Verpackungszuschnitten.

Für die Verarbeitung, Zusammenstellung, Gruppierung und Verpackung von Artikeln wie bspw. Getränkebehältern gibt es unterschiedliche Verpackungsarten. Eine häufig gebrauchte Variante besteht etwa in einer Zusammenfassung mehrerer gleichartiger Artikel bzw. Behälter zu tragbaren, relativ handlichen Gebindeeinheiten oder Verpackungseinheiten. Auch hierfür sind verschiedene Möglichkeiten bekannt, einzelne Artikel oder Behälter zu größeren Gebinden zusammenzufassen. So werden bspw. Getränkebehälter meist mittels Schrumpffolien zu Gebinden von vier, sechs oder mehr Behältern zusammengefasst und verpackt. Die Herstellung von Gebinden ist meist unumgänglich, da sie die häufigste Variante von Verpackungseinheiten für Getränkebehälter oder Flaschen aus PET-Kunststoff darstellen. Die Gebinde werden für den Transport teilweise nochmals zusammengefasst und/oder in Lagen zusammengestellt und palettiert.

Weiterhin ist die Verwendung von sogenannten oberen Greifkartonverpackungen bekannt, um beispielsweise mehrere Flaschen über ihre Halsbereiche oder mehrere Dosen zusammenzufassen. Eine Verpackungsmaschine zum Aufsetzen solcher oberen Greifkartonverpackungen ist in der Patentschrift EP 1 075 419 B1 beschrieben. Hierbei sind die Artikel oder Behälter in einer Kiste angeordnet und die Greifkartonverpackung wird von oben auf den mindestens einen in der Kiste angeordneten Artikel aufgesetzt. Insbesondere ist in der Kiste eine Mehrzahl von Artikeln angeordnet, und durch das Aufsetzen einer geringeren Anzahl an oberen Greifkartonverpackungen werden Untergruppen gebildet, die jeweils einen Teil der in der Kiste angeordneten Artikel zusammenfassen.

Eine Greifkartonverpackung weist eine Anordnung und Anzahl von Durchtrittsöffnungen auf, die der Anordnung und Anzahl der zusammenzufassenden Artikel oder Behälter entsprechen. Der Durchmesser der Durchtrittsöffnungen ist dabei in der Regel geringfügig geringer als ein maximaler Durchmesser der Artikel in einem oberen Bereich. Die Greifkartonverpackung wird auf die Artikel aufgesetzt und aufgedrückt, so dass ein definierter oberer Bereich der Artikel durch die Durchtrittsöffnungen durchgedrückt wird.

Insbesondere wird ein oberer Bereich der Artikel mit einem maximalen Durchmesser durch die Durchtrittsöffnungen durchgedrückt und die Randbereiche der Durchtrittsöffnungen werden unterhalb dieses maximalen Durchmessers mit den Artikeln in Eingriff gebracht, so dass die Greifkartonverpackung sicher und fest an den Artikeln festgelegt wird.

Um die Greifkartonverpackung derart an den Artikeln festzulegen und um die Artikel durch die Durchtrittsöffnungen hindurchdrücken zu können, sind gewisse Applikationskräfte notwendig. Dementsprechend müssen die Artikel dieser Applikationskraft einen geeigneten Widerstand entgegenbringen, damit die Artikel beim Aufbringen der Greifkartonverpackung nicht beschädigt werden.

Die Offenlegungsschrift WO 2020/ 233 943 A1 beschreibt eine Verpackungsvorrichtung und ein Verfahren zur Herstellung von Verpackungseinheiten. In einem Magazin wird eine Vielzahl an flächigen Verpackungszuschnitten gestapelt bereitgestellt. Hierbei ist ein Industrieroboter mit einem Arbeitswerkzeug beschrieben, der zeitgleich mehrere flächige Verpackungszuschnitte entgegennehmen kann und diese an mehreren Artikelgruppierungen anbringt.

Insbesondere für einen kontinuierlichen Betrieb einer Verpackungsmaschine ist es sinnvoll, einer Applikationsvorrichtung jederzeit eine genügende Anzahl von Verpackungszuschnitten zur Verfügung zu stellen, was mit ausreichend großen Magazinen problemlos zu gewährleisten ist. Größere Magazine für bereitgehaltene Verpackungszuschnitte bedingen allerdings einen größeren Handhabungsaufwand, um solche Magazine nach dem Verbrauch der darin bevorrateten Verpackungszuschnitte wieder zu befüllen oder gegen ein befülltes Magazin auszutauschen. Ein solcher Austausch oder eine Wiederbefüllung eines Magazins ist zudem mit einer Betriebsunterbrechung verbunden, sofern nur ein einziges Magazin vorhanden ist.

Zudem sind größere Magazine mit einem erhöhten Platzbedarf innerhalb einer Verpackungsmaschine verbunden, wogegen es das Ziel vieler Maschinenlayouts ist, die einzelnen Anlagenmodule möglichst kompakt auszubilden.

Wechselmagazine, die wechselseitig ausgetauscht werden können, während die Verpackungsmaschine weiterbetrieben werden kann, beseitigen zumindest den Nachteil der bei nur einem Magazin unumgänglichen Betriebsunterbrechung, wenn das Magazin ausgetauscht oder wiederbefüllt werden muss. Allerdings kann auch beim Einsatz von Wechselmagazinen das Problem auftreten, dass der Verpackungsbetrieb beim Austausch eines leeren Magazinteils gegen ein befülltes Austauschmagazin unterbrochen werden muss, insbesondere bei sehr kompakten Anlagenmodulen, bei denen bewegliche Maschinen- oder Roboterteile keinen manuellen Eingriff in den jeweiligen Magazinplatz erlauben, da aus Sicherheitsgründen ein solcher Eingriff oder ein Zutritt einer Person nur bei stillstehenden Robotern möglich sein soll.

Angesichts dieser erkannten Nachteile kann es als vorrangiges Ziel der Erfindung betrachtet werden, einen Magazinwechsel bei einer Verpackungsmaschine derart abzusichern, so dass ein gefahrloser Austausch von Magazinteilen mit darin bevorrateten Verpackungszuschnitten ohne Unterbrechung eines laufenden Verpackungsbetriebes ermöglicht ist.

Dieses Ziel wird mit dem Gegenstand der unabhängigen Ansprüche erreicht. Merkmale vorteilhafter Weiterbildungen der Erfindung lassen sich den jeweiligen abhängigen Ansprüchen entnehmen.

Zur Erreichung des genannten Ziels schlägt die vorliegende Erfindung eine Verpackungsvorrichtung mit den Merkmalen des unabhängigen Anspruchs 1 vor, die der Herstellung von Verpackungseinheiten dient, welche Verpackungseinheiten insbesondere jeweils durch Zusammenfassen von aus mindestens zwei Artikeln gebildeten Artikelgruppierungen mittels Applizierens mindestens eines Verpackungszuschnittes gebildet sein können.

Die Verpackungsvorrichtung umfasst mindestens einen Handhabungsroboter, der auf wenigstens zwei in Reichweite eines beweglichen Werkzeugkopfes des Handhabungsroboters befindliche Teilmagazine eines Magazins mit jeweils darin bereitgehaltenen Verpackungszuschnitten zugreift, welche mittels des wenigstens einen Handhabungsroboters von dort entnehmbar und an jeweils bereitstehende Artikelgruppierungen applizierbar sind. Außerdem ist vorgesehen, dass jeweils eines der Teilmagazine des Magazins zur Wiederbefüllung nach einer Entnahme der dort verfügbar gehaltenen Verpackungszuschnitte unter Weiternutzung des jeweils anderen Teilmagazins zumindest teilweise aus einer Betriebsposition oder aus seinem zugehörigen Magazinplatz entnehmbar ist. Dieses Entnehmen kann auch einem Austausch gegen ein bereits mit Verpackungszuschnitten befülltes vorausgehen.

Schließlich ist bei der erfindungsgemäßen Verpackungsvorrichtung vorgesehen, dass das jeweils aus der Betriebsposition, insbesondere aus der Verpackungsvorrichtung entnommene Teilmagazin und/oder der betreffende Magazinplatz zumindest temporär mittels einer beweglichen Barriere vom Werkzeugkopf des Handhabungsroboters abschirmbar ist.

Wenn im vorliegenden Zusammenhang von Artikeln gesprochen wird, die durch Applizieren eines Verpackungszuschnittes zu Verpackungseinheiten oder Gebinden zusammengefasst werden, so kann sich dabei insbesondere um Getränkebehälter handeln, bspw. um Flaschen aus PET-Kunststoff oder aus einem anderen geeigneten Kunststoffmaterial. Wahlweise können die Artikel auch durch Glasflaschen oder durch Dosen aus Kunststoff oder aus Leichtmetall gebildet sein.

Die hier so bezeichneten Verpackungszuschnitte können bspw. durch flächige Verpackungszuschnitte in Form sog. oberer Greifkartonverpackungen, sog. Top-Clips o.ä. gebildet sein. Die Verpackungszuschnitte weisen eine Anordnung und Anzahl von Durchtrittsöffnungen auf, die der Anordnung und Anzahl der zusammenzufassenden Artikel oder Behälter entsprechen. Der Durchmesser der Durchtrittsöffnungen ist dabei in der Regel geringfügig geringer als ein maximaler Durchmesser der Artikel in einem oberen Bereich oder in einem Halsbereich.

Der insbesondere flächige Verpackungszuschnitt kann bspw. aus stofflich wiederverwertbaren zellulosehaltigen Materialien gefertigt sein. So kann der flächige Verpackungszuschnitt bspw. durch Pappe und/oder durch Karton gebildet sein, was sich nach Gebrauch problemlos recyclen lässt. Darüber hinaus ist es denkbar, dass der flächige Verpackungszuschnitt einem Kunststoff- oder Verbundmaterial gefertigt ist, wobei insbesondere sortenreine Thermoplast-Kunststoffe zum Einsatz kommen dürften, die sich ebenfalls gut wiederverwerten lassen.

Gemäß einer weiteren Ausführungsform kann sich der flächige Verpackungszuschnitt aus mehreren zellulosehaltigen Schichten zusammensetzen oder aus einer Kombination von unterschiedlichen Materialien, sowie unterschiedlichen recycelten Materialien bestehen. Zudem kann vorgesehen sein, dass der Verpackungszuschnitt weiterhin mehrere Ausnehmungen besitzt, welche ggf. gemeinsam einen Tragegriff ausbilden.

Der mindestens eine Handhabungsroboter ist dazu ausgebildet, jeweils mindestens einen Verpackungszuschnitt, wahlweise auch gleichzeitig zwei Verpackungszuschnitte aus dem Magazin aufzunehmen und den mindestens einen Verpackungszuschnitt oder die zwei Verpackungszuschnitte an eine bereitstehende Artikelgruppierung zu applizieren. Hierfür kann der Handhabungsroboter vorzugsweise entsprechend ausgestattete Greifelemente zum Erfassen der Verpackungszuschnitte aufweisen, bspw. Sauggreifer o.ä.

Der mindestens eine Handhabungsroboter der Verpackungsvorrichtung ist in einer Weise ausgebildet und ausgestattet, dass er jeweils einzeln oder paarweise Verpackungszuschnitte aus einem der Teilmagazine des Magazins entnehmen und an eine jeweils bereitstehende Artikelgruppierungen applizieren kann, wodurch diese Artikelgruppierung zu einer Verpackungseinheit zusammengefasst wird. Diese Applikationsvorgänge erfolgen vorzugsweise in permanenter Wiederholung, so dass in gegebener Zeit eine Vielzahl an Verpackungseinheiten gebildet werden können.

Um eine Kollision einer sich im Magazin aufhaltenden oder in das Magazin hineingreifenden Person zuverlässig zu verhindern, ist vorgesehen, dass die bewegliche Barriere jeweils eines der Teilmagazine zumindest temporär von einem die Verpackungszuschnitte ergreifenden und aus dem jeweiligen Teilmagazin entnehmenden Werkzeugkopf des Handhabungsroboters abschirmt, zumindest während eines Magazinwechselvorganges. Auf diese Weise kann die bewegliche Barriere einen vom Werkzeugkopf des Handhabungsroboters abgeschirmten Bereich schaffen, in dem sich das neu mit Verpackungszuschnitten zu bestückende Teilmagazin und/oder ein Magazinplatz für das neu mit Verpackungszuschnitten zu bestückende Teilmagazin befindet.

Typischerweise kann die bewegliche Barriere einen vom Werkzeugkopf des Handhabungsroboters abgeschirmten Bereich schaffen oder ausbilden, der sich unterhalb eines Höhenniveaus des Handhabungsroboters befindet. Somit können die Teilmagazine und/oder die Magazinplätze für die Teilmagazine jeweils oberseitig mittels der beweglichen Barriere abgedeckt werden, wenn diese bewegliche Barriere zwischen den Handhabungsroboter und das Magazin bzw. das Teilmagazin bewegt wurde.

Eine bevorzugte Ausführungsvariante der erfindungsgemäßen Verpackungsvorrichtung kann zudem vorsehen, dass die bewegliche Barriere durch mindestens eine Abdeckplatte gebildet ist, die in einer horizontalen Schwenklage zumindest Bereiche des Magazins vom Handhabungsroboter abschirmt. Insbesondere kann vorgesehen sein, dass die Abdeckplatte in ihrer horizontalen Schwenklage zumindest ein Teilmagazin und/oder einen der wenigstens zwei Magazinplätze vom Handhabungsroboter abschirmt.

In diesem Zusammenhang kann vorgesehen sein, dass jedem Teilmagazin und/oder Magazinplatz jeweils eine durch mindestens eine schwenkbare Abdeckplatte gebildete bewegliche Barriere zugeordnet ist.

Weiterhin kann die erfindungsgemäße Verpackungsvorrichtung in einer Weise ausgestaltet sein, dass die mindestens eine Abdeckplatte der beweglichen Barriere in einem inaktiven Zustand zur Seite geschwenkt ist und das Magazin und/oder das Teilmagazin für den Werkzeugkopf des Handhabungsroboters zugänglich bleiben lässt. So kann die mindestens eine Abdeckplatte bspw. mittig faltbar sein, wobei die mittig faltbare Abdeckplatte in ihrem inaktiven Zustand in einer Weise gefaltet ist, dass ihre beiden Hälften aneinander oder aufeinandergelegt und zur Seite geschwenkt sind, wobei die Abdeckplatte oder die Abdeckplattenhälften insbesondere in eine ungefähr vertikale Schwenklage gebracht sind.

Die mindestens eine Abdeckplatte der beweglichen Barriere kann vorzugsweise aktuatorisch bewegt werden, insbesondere mittels elektrischer Stellantriebe, mittels fluidisch betätigter Stellzylinder o. dgl. Die Falt- und/oder Verschiebe- oder Klappbewegungen der beweglichen Barriere können solchermaßen auch in automatisierter Weise ausgeführt werden, insbesondere in Zusammenwirken mit einem automatisierten oder teilautomatisierten Wechsel der Teilmagazine mit den dort gestapelten Verpackungszuschnitten.

Bei der Verpackungsvorrichtung können die Teilmagazine des Magazins zum Wiederbefüllen mit neuen Verpackungszuschnitten aus ihrer aktiven Lage bzw. von ihrem Magazinplatz entnommen und aus der Verpackungsmaschine herausbewegt werden. Hierbei kann vorgesehen sein, dass die Teilmagazine manuell aus der Verpackungsmaschine entnommen und mit neuen Verpackungszuschnitten bestückt werden.

Alterativ hierzu kann jedoch auch vorgesehen sein, dass die Teilmagazine teil- oder vollautomatisch aus der Verpackungsmaschine herausbewegt und mit neuen Verpackungszuschnitten bestückt werden können, was sich in vorteilhafter Weise mit der erwähnten Steuerung für die Bewegungen der Barriere koppeln lässt.

Sofern aus Sicht des angesprochenen Fachmannes sinnvoll miteinander kombinierbar, können einige der oder alle dieser zuvor genannten Variationen oder Ausführungsvarianten der erfindungsgemäßen Verpackungsvorrichtung wahlweise auch miteinander kombiniert werden, um das oben formulierte Ziel zumindest teilweise zu erreichen, und/oder um den gewünschten Effekt der Erfindung zu erzielen.

Zur Erreichung des oben formulierten Ziels schlägt die vorliegende Erfindung neben der in verschiedenen Ausführungsvarianten erläuterten Verpackungsvorrichtung weiterhin ein Verfahren zur Versorgung einer Verpackungsvorrichtung mit Verpackungszuschnitten mit den Merkmalen des unabhängigen Verfahrensanspruch vor. Die Verpackungszuschnitte werden in diesem Zusammenhang insbesondere zur Herstellung von Verpackungseinheiten aus gruppierten Artikeln eingesetzt und werden der Verpackungsvorrichtung zur sequentiellen Entnahme aus einem Magazin zur Verfügung gestellt.

Das Magazin umfasst mindestens zwei separate Teilmagazine für jeweils einen darin bereitgehaltenen Vorrat an Verpackungszuschnitten, wobei jedes einzelne Teilmagazin nach einer Entnahme der dort bevorrateten und der Verpackungsvorrichtung verfügbar gehaltenen Verpackungszuschnitte unter Weiternutzung des jeweils anderen Teilmagazins wiederbefüllt und mit neuen Verpackungszuschnitten bestückt werden kann. Außerdem wird/werden zumindest das wiederbefüllte und mit neuen Verpackungszuschnitten bestückte Teilmagazin und/oder ein betreffender Magazinplatz mittels einer beweglichen Barriere von beweglichen Handhabungseinrichtungen der Verpackungsvorrichtung abgeschirmt.

Auf diese Weise kann der inaktive Magazinplatz von einer Person betreten werden oder es kann eine Person in diesen Magazinplatz hineingreifen, ohne dass die Gefahr einer Kollision mit beweglichen Teilen einer Verpackungsvorrichtung oder mit einer beweglichen Handhabungseinrichtung besteht, da dies durch die Aktivierung der beweglichen Barriere zuverlässig verhindert werden kann.

Die bewegliche Handhabungsrichtung der Verpackungsvorrichtung kann insbesondere durch mindestens einen auf das Magazin mit den Verpackungszuschnitten zugreifenden Handhabungsroboter gebildet werden, der die ergriffenen Verpackungszuschnitte auf hierfür bereitgestellte Artikelgruppierungen applizieren kann. Ein solcher Handhabungsroboter kann vorzugsweise einzelne oder mehrere Verpackungszuschnitte aus einem der Teilmagazine des Magazins entnehmen und an jeweils bereitstehende Artikelgruppierungen applizieren, welche dadurch zu Verpackungseinheiten zusammengefasst werden.

Eine Variante des erfindungsgemäßen Verfahrens kann vorsehen, dass die bewegliche Barriere jeweils eines der Teilmagazine zumindest temporär von einem die Verpackungszuschnitte ergreifenden und aus dem jeweiligen Teilmagazin entnehmenden Werkzeugkopf des Handhabungsroboters abschirmt. Insbesondere kann die bewegliche Barriere auf diese Weise einen vom Werkzeugkopf des Handhabungsroboters abgeschirmten Bereich schaffen, in dem sich das neu mit Verpackungszuschnitten zu bestückende Teilmagazin und/oder ein Magazinplatz für das neu mit Verpackungszuschnitten zu bestückende Teilmagazin befindet.

Wenn die bewegliche Barriere zwischen den Handhabungsroboter und das Magazin bzw. das Teilmagazin bewegt wurde, können die Teilmagazine und/oder die Magazinplätze für die Teilmagazine jeweils oberseitig abgedeckt und einem manuellen Zugriff zugänglich gemacht werden, ohne dass eine Kollisionsgefahr mit dem Handhabungsroboter besteht.

Die Barriere kann bspw. durch eine mehrteilige Abdeckplatte gebildet werden, die sich falten und zwischen einer aktiven Position und einer inaktiven Position bewegen lässt. In einer ausgefalteten aktiven Position lässt sich der Magazinplatz vom Handhabungsroboter abtrennen, während die inaktive Position den Handhabungsroboter ungehindert in das Magazin greifen lässt. So kann das Verfahren bspw. vorsehen, dass die mindestens eine Abdeckplatte mittig faltbar ist, wobei die Abdeckplatte in ihrem inaktiven Zustand in einer Weise gefaltet sein kann, dass ihre beiden Hälften aneinander oder aufeinandergelegt und zur Seite geschwenkt sind, wobei die Abdeckplatte oder die Abdeckplattenhälften insbesondere in eine ungefähr vertikale Schwenklage gebracht sind.

Sofern aus Sicht des angesprochenen Fachmannes sinnvoll miteinander kombinierbar, können einige der oder alle dieser zuvor genannten Variationen oder Ausführungsvarianten des erfindungsgemäßen Verfahrens wahlweise auch miteinander kombiniert werden, um das oben formulierte Ziel zumindest teilweise zu erreichen, und/oder um den gewünschten Effekt der Erfindung zu erzielen.

Es sei an dieser Stelle ausdrücklich erwähnt, dass alle Aspekte und Ausführungsvarianten, die im Zusammenhang mit der erfindungsgemäßen Verpackungsvorrichtung erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Verpackungsvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Verpackungsvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Verpackungsvorrichtung.

Nachfolgend sollen im Interesse eines leichteren Verständnisses der zuvor anhand einiger Ausführungsvarianten erläuterten erfindungsgemäßen Verpackungsvorrichtung sowie des ebenfalls anhand einiger Verfahrensvarianten erläuterten erfindungsgemäßen Verfahrens, das der Versorgung einer solchen Verpackungsvorrichtung mit Verpackungszuschnitten dient, die insbesondere zur Herstellung von Verpackungseinheiten aus gruppierten Artikeln eingesetzt werden, nochmals einige Aspekte näher beleuchtet werden, welche die Erfindung beispielhaft wiedergeben. Die nachfolgend näher betrachteten Varianten dürfen als ergänzende Beschreibung verstanden werden, die jedoch nicht im Widerspruch mit den obigen Beschreibungen stehen, sondern allenfalls im Einzelfall als abweichende Ausführungsbeispiele angesehen werden sollen.

Die erfindungsgemäße Verpackungsvorrichtung kann als modularer Bestandteil einer umfassenderen und komplexeren Verpackungsmaschine betrachtet werden. Die hier betrachtete Verpackungsvorrichtung dient der Herstellung von hier nicht in allen ihren Details erläuterten Verpackungseinheiten. Diese Verpackungseinheiten werden dadurch gebildet, dass Artikelgruppierungen, die jeweils zwei oder mehr zuvor gruppierte Artikel umfassen können, mit einem Verpackungszuschnitt zusammengefasst werden. Die hier ebenfalls nicht näher erläuterten Verpackungszuschnitte werden an die Artikelgruppierungen appliziert und können dort bspw. verrastet werden.

Solche typischerweise aus flächigem Kartonmaterial, wahlweise auch aus flächigem Kunststoffmaterial, aus Verbundmaterial oder aus stofflich wiederverwertbarem zellulosehaltigem Material gefertigten Verpackungszuschnitte weisen meist mehrere Öffnungen an definierten Positionen auf, so dass in hierfür vorgesehene Öffnungen jeweils einzelne Artikel einsteckbar sind, so dass die Artikel in der jeweiligen Öffnung eines solchen Verpackungszuschnittes formschlüssig gehalten sind. Solche Verpackungen werden in der Praxis auch als Top-Clip oder als Greifkartonverpackungen bezeichnet.

Die Verpackungszuschnitte weisen eine Anordnung und Anzahl von Durchtrittsöffnungen auf, die der Anordnung und Anzahl der in der jeweiligen Verpackungseinheit zusammenzufassenden Artikel oder Behälter entsprechen. Der Durchmesser der Durchtrittsöffnungen ist dabei in der Regel geringfügig kleiner als ein maximaler Durchmesser der Artikel in einem oberen Bereich. Wahlweise können die Verpackungszuschnitte mehrere Ausnehmungen besitzen, welche ggf. gemeinsam einen Tragegriff ausbilden.

Solche typischerweise aus flächigem Kartonmaterial gefertigten Verpackungszuschnitte werden normalerweise in einem Magazin bevorratet und der Verpackungsvorrichtung zur Verfügung gestellt, damit sie nacheinander an die bereitstehenden oder in kontinuierlichem Förderprozess durch die Verpackungsmaschine bewegten Artikelgruppierungen appliziert werden können. Das erwähnte Magazin kann insbesondere durch zwei separate Teilmagazine gebildet sein.

Die beiden Teilmagazine des Magazins befinden sich in Reichweite eines beweglichen Werkzeugkopfes eines Handhabungsroboters, der auf die in den Teilmagazinen bereitgehaltenen Verpackungszuschnitte zugreifen und diese dort ergreifen und entnehmen kann, um sie jeweils an die bereitstehenden oder durch die Verpackungsvorrichtung bewegten Artikelgruppierungen zu applizieren.

Das Magazin kann vorzugsweise in einer Weise ausgestaltet sein, dass eines der beiden Teilmagazine zum Zwecke der Wiederbefüllung nach der Entnahme aller dort verfügbar gehaltenen Verpackungszuschnitte aus einer Betriebsposition eines Magazinplatzes entnommen werden kann, während das andere Teilmagazin weiterhin in der Reichweite des Handhabungsroboters und dessen beweglichen Werkzeugkopfes verbleibt, so dass aus diesem - als aktiv zu betrachtendem - Magazin weiterhin Verpackungszuschnitte zur Applikation an die zu bestückenden Artikelgruppierungen entnommen werden können.

Wenn sich eines der Teilmagazine in einer Entnahme- oder Wechselposition befindet, so ermöglicht dies dessen Wiederbefüllung und Bestückung mit neuen Verpackungszuschnitten oder den Austausch des geleerten Teilmagazins gegen ein anderes, mit Verpackungszuschnitten befüllten Teilmagazins.

Wahlweise können die Teilmagazine bzw. das Magazin mit beweglichen Barrieren ausgestattet sein, die sich jeweils über die Oberseiten der beiden Magazinplätze bewegen lassen und solchermaßen die beiden Magazinplätze bedarfsweise vom Werkzeugkopf des Handhabungsroboters abschirmen können. Die beweglichen Barrieren dienen insbesondere dazu, den Magazinplatz, vom dem das betreffende Teilmagazin aus seiner jeweiligen Betriebsposition entnommen und in die Entnahme- oder Wechselposition gebracht wurde, so abzuschirmen, dass sich im Bereich dieses Magazinplatzes gefahrlos eine Person aufhalten oder dort hineingreifen kann, ohne dass dabei eine Kollision mit dem Werkzeugkopf oder anderen beweglichen Teilen des Handhabungsroboters droht.

Die an den Oberseiten der jeweiligen Magazinplätze befindlichen beweglichen Barrieren, die der temporären und je nach Bedarf aktivierbaren Abschirmung der Magazinplätze dienen, können insbesondere jeweils durch zweiteilige schwenkbare Abdeckplatten gebildet sein. Sofern die Abdeckplatten in eine ungefähr horizontale Position gebracht sind, trennen sie den jeweiligen Magazinplatz räumlich vom Bewegungsraum des Handhabungsroboters ab.

Gleichzeitig kann die zweiteilige schwenkbare Abdeckplatte, welche die bewegliche Barriere für den aktiven Magazinplatz bildet, in eine ungefähr vertikale Position gebracht sein, so dass die Oberseite des in seiner Betriebslage auf dem zugehörigen Magazinplatz befindlichen Teilmagazins frei zugänglich bleibt, wodurch auch der Werkzeugkopf des Handhabungsroboters dort die im ersten Teilmagazin gestapelten Verpackungszuschnitte entnehmen kann.

Die Teilmagazine können bspw. auf Schienensystemen oder auf andere Weise zwischen ihrer jeweiligen Betriebsposition und ihrer Entnahme- oder Wechselposition bewegt und solchermaßen aus dem Magazin der Verpackungsvorrichtung herausbewegt werden, um sie mit neuen Stapeln von Verpackungszuschnitten bestücken zu können. In gleicher Weise können sie solchermaßen wieder in das Magazin hineinbewegt werden, wenn sie komplett mit Verpackungszuschnitten bestückt sind.

Die Teilmagazine können bspw. auch unterseitige Auszugplattformen aufweisen, so dass sie in horizontaler Richtung aus ihren jeweiligen Betriebspositionen in die für das jeweilige Teilmagazin vorgesehenen Entnahme- oder Wechselpositionen gebracht werden können.

Die beiden Teilmagazine sind jeweils dafür vorbereitet, eine Vielzahl von flach übereinander gestapelten Verpackungszuschnitten aufzunehmen, so dass der mit geeigneten Greifwerkzeugen ausgestattete Werkzeugkopf des Handhabungsroboters einzeln die Verpackungszuschnitte oberseitig von den Stapeln abnehmen kann, um sie zu einem Applikationsbereich zu verbringen, in dem die Verpackungszuschnitte jeweils an die hierfür bereitstehenden oder dort in Transportrichtung entlangbeförderten Artikelgruppierungen zu applizieren, wodurch diese zu Verpackungseinheiten verarbeitet werden.

Das Magazin befindet sich vorzugsweise unmittelbar neben dem Applikationsbereich, wobei ein Bewegungsraum des Handhabungsroboters sowohl das Magazin mit den in Betriebspositionen befindlichen Teilmagazinen als auch den Applikationsbereich abdeckt. Wahlweise können zwei nebeneinander befindliche Handhabungsroboter vorgesehen sein, wobei ein erster Handhabungsroboter räumlich dem Magazin zugeordnet sein kann, während ein daneben befindlicher zweiter Handhabungsroboter in räumlicher Hinsicht dem Applikationsbereich zugeordnet sein kann.

Vorzugsweise decken jedoch die jeweiligen Bewegungsräume zweier vorhandener Handhabungsroboter sowohl das Magazin als auch den Applikationsbereich ab, so dass sie in parallelem Betrieb für eine hohe Verarbeitungsgeschwindigkeit sorgen können, wenn sie wechselseitig und unter Vermeidung von Kollisionen jeweils Verpackungszuschnitte aus einem der beiden Teilmagazine entnehmen und den mittels ihres jeweiligen Werkzeugkopfes aufgenommenen Verpackungszuschnitt in den Applikationsbereich überführen und dort auf eine Artikelgruppierung applizieren.

Der wenigstens eine Handhabungsroboter oder die beiden Handhabungsroboter können bspw. jeweils als Tripoden oder als Parallelkinematik-Roboter mit drei oberseitig an einem Rahmengestell beweglich aufgehängten Knickarm-Paaren und unterseitig an diesen Knickarm-Paaren aufgehängtem Werkzeugkopf ausgebildet sein.

Wahlweise könnten die Handhabungsroboter jedoch auch als Portalroboter oder als stehend positionierte Mehrgelenk-Knickarmroboter o. dgl. ausgebildet sein. Die Ausgestaltung als Parallelkinematik-Roboter hat jedoch den Vorteil, dass auf vergleichsweise engem Raum zwei solche Handhabungsroboter untergebracht werden können, deren Bewegungssteuerung so programmiert ist, dass ein Parallelbetrieb möglich ist, ohne dass die Werkzeugköpfe oder die Arme der Roboter miteinander kollidieren.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1A bis 1C zeigen verschiedene perspektivische Ansichten einer Ausführungsvariante einer erfindungsgemäßen Verpackungsvorrichtung, die mit wechselbaren Teilmagazinen für gestapelte Verpackungszuschnitte ausgestattet ist.

Figuren 2A bis 2C zeigen mehrere perspektivische Ansichten einer beweglichen Barriere, mit der ein Teilmagazin der Verpackungsvorrichtung gemäß Fig. 1 abgedeckt werden kann.

Figuren 3A und 3B zeigen jeweils eine gefaltete Barriere für ein Teilmagazin, wodurch dieses für einen Handhabungsroboter zugänglich gemacht ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

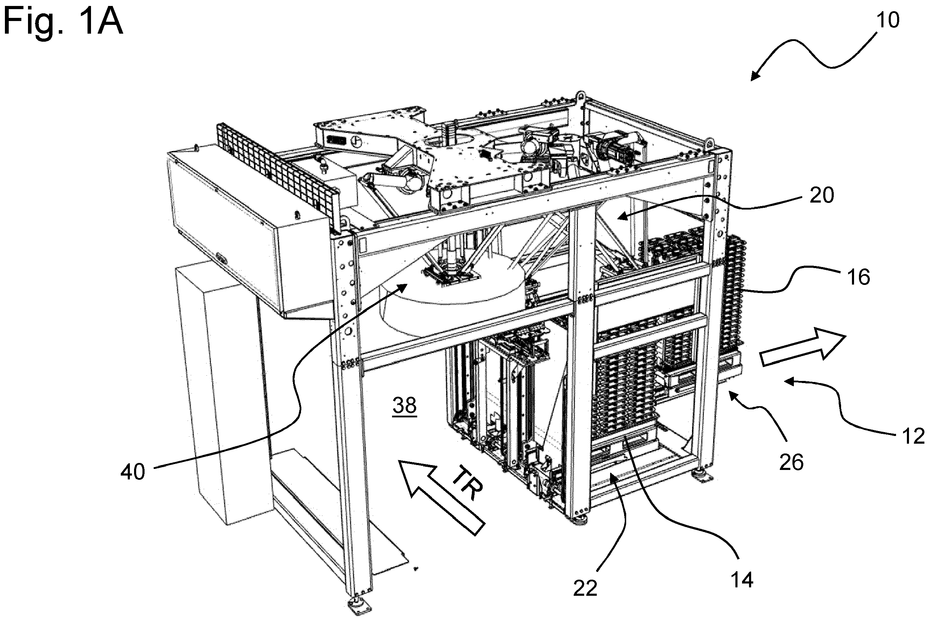

Die schematischen und perspektivischen Darstellungen der Figuren 1A bis 1C zeigen unterschiedliche Ansichten einer Ausführungsvariante einer erfindungsgemäßen Verpackungsvorrichtung 10. Die Verpackungsvorrichtung 10, die insbesondere ein modularer Bestandteil einer umfassenderen und komplexeren Verpackungsmaschine sein kann, dient der Herstellung von hier nicht verdeutlichten Verpackungseinheiten. Diese Verpackungseinheiten werden dadurch gebildet, dass Artikelgruppierungen, die jeweils zwei oder mehr zuvor gruppierte Artikel umfassen können, mit einem Verpackungszuschnitt zusammengefasst werden. Die hier ebenfalls nicht näher verdeutlichten Verpackungszuschnitte werden an die Artikelgruppierungen appliziert und können dort bspw. verrastet werden.

Solche typischerweise aus flächigem Kartonmaterial, wahlweise auch aus Kunststoff, aus Verbundmaterial oder aus stofflich wiederverwertbarem zellulosehaltigem Material gefertigten Verpackungszuschnitte weisen meist mehrere Öffnungen an definierten Positionen auf, so dass in hierfür vorgesehene Öffnungen jeweils einzelne Artikel einsteckbar sind, so dass die Artikel in der jeweiligen Öffnung eines solchen Verpackungszuschnittes formschlüssig gehalten sind. Solche Verpackungen werden in der Praxis auch als Top-Clip oder als Greifkartonverpackungen bezeichnet.

Die Verpackungszuschnitte weisen eine Anordnung und Anzahl von Durchtrittsöffnungen auf, die der Anordnung und Anzahl der zusammenzufassenden Artikel oder Behälter entsprechen. Der Durchmesser der Durchtrittsöffnungen ist dabei in der Regel geringfügig geringer als ein maximaler Durchmesser der Artikel in einem oberen Bereich. Wahlweise können die Verpackungszuschnitte mehrere Ausnehmungen besitzen, welche ggf. gemeinsam einen Tragegriff ausbilden.

Solche typischerweise aus flächigem Kartonmaterial gefertigten Verpackungszuschnitte werden normalerweise in einem Magazin 12 bevorratet und der Verpackungsvorrichtung 10 zur Verfügung gestellt, damit sie nacheinander an die bereitstehenden oder in kontinuierlichem Förderprozess durch die Verpackungsmaschine bewegten Artikelgruppierungen appliziert werden können. Die in den Figuren 1A bis 1C beispielhaft gezeigte Verpackungsvorrichtung 10 umfasst ein solches Magazin 12, das durch zwei separate Teilmagazine 14 und 16 gebildet ist.

Die beiden Teilmagazine 14 und 16 des Magazins 12 befinden sich in Reichweite eines beweglichen Werkzeugkopfes 18 eines Handhabungsroboters 20, der auf die in den Teilmagazinen 14 und 16 bereitgehaltenen Verpackungszuschnitte zugreifen und diese dort entnehmen kann, um sie jeweils an die bereitstehenden oder durch die Verpackungsvorrichtung 10 bewegten Artikelgruppierungen zu applizieren.

Das Magazin 12 ist in einer Weise ausgestaltet, dass eines der beiden Teilmagazine 14 oder 16 zum Zwecke der Wiederbefüllung nach der Entnahme aller dort verfügbar gehaltenen Verpackungszuschnitte aus einer Betriebsposition 22 aus seinem Magazinplatz 24 entnommen werden kann, während das andere Teilmagazin 16 bzw. 14 weiterhin in der Reichweite des Handhabungsroboters 20 und dessen beweglichen Werkzeugkopfes 18 verbleibt, so dass aus diesem Magazin 16 bzw. 14 weiterhin Verpackungszuschnitte zur Applikation an die Artikelgruppierungen entnommen werden können.

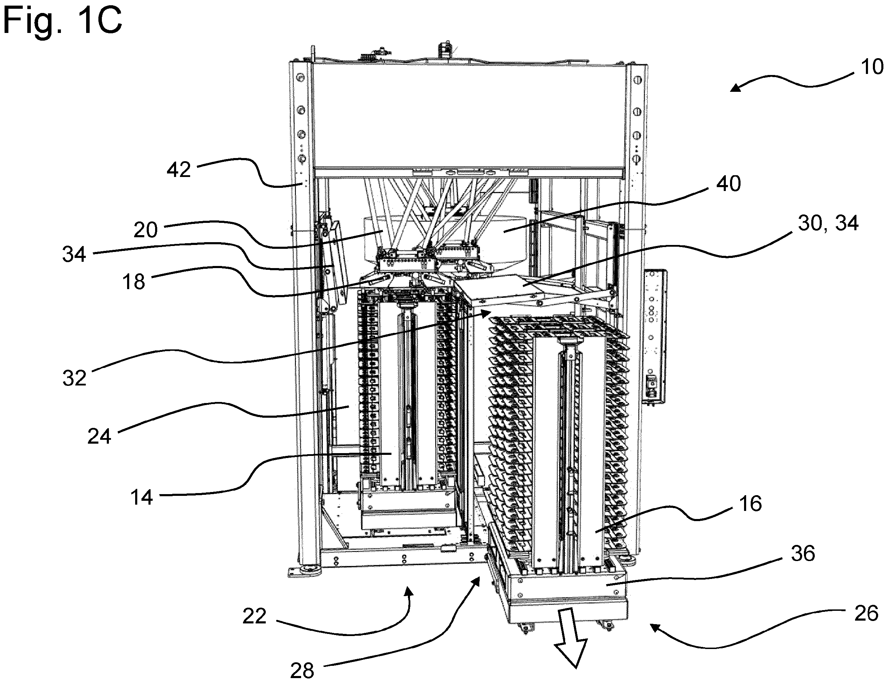

Insbesondere die perspektivische Seitenansicht der Fig. 1C lässt eine Situation erkennen, bei der sich das links im Magazin 12 befindliche erste Teilmagazin 14 in seiner Betriebsposition 22 auf einem innerhalb des Magazins 12 befindlichen ersten Magazinplatz 24 befindet, so dass der Handhabungsroboter 20 aus diesem ersten Teilmagazin 14 die Verpackungszuschnitte entnehmen kann. Dagegen befindet sich das rechts im Magazin 12 befindliche zweite Teilmagazin 16 in einer Entnahme- oder Wechselposition 26, bei der das zweite Teilmagazin 16 von seinem zugehörigen zweiten Magazinplatz 28 entnommen und aus dem Magazin 12 herausbewegt wurde. Diese Entnahme- oder Wechselposition 26 des zweiten Teilmagazins 16 erlaubt wahlweise dessen Wiederbefüllung und Bestückung mit neuen Verpackungszuschnitten oder den Austausch des geleerten Teilmagazins 16 gegen ein anderes, mit Verpackungszuschnitten befüllten Teilmagazins (hier nicht dargestellt).

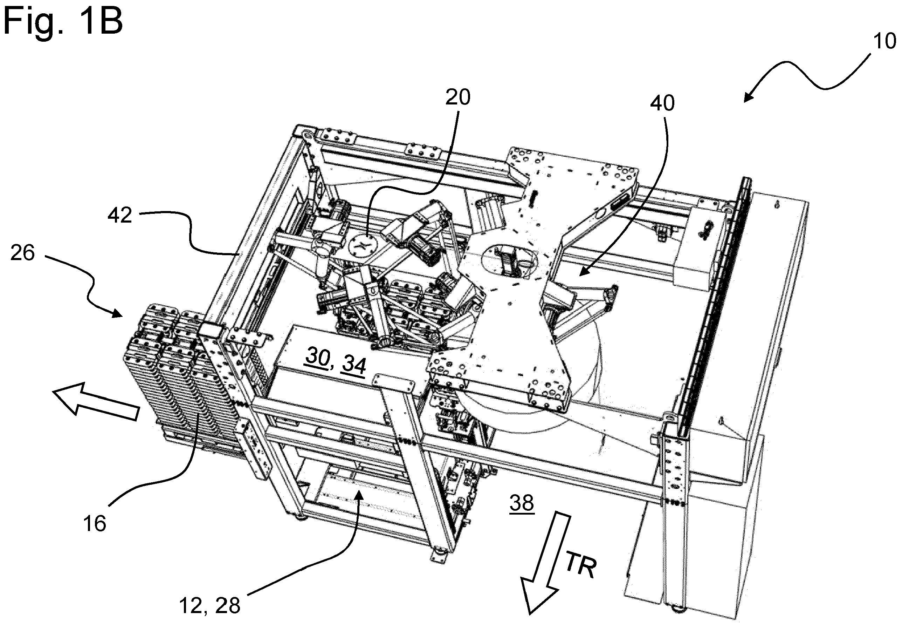

Die perspektivische Draufsicht von schräg oben der Fig. 1B sowie die perspektivische Seitenansicht der Fig. 1C lassen jeweils bewegliche Barrieren 30 erkennen, die sich jeweils über die Oberseiten 32 der beiden Magazinplätze 24 und 28 bewegen lassen und solchermaßen die beiden Magazinplätze 24 oder 28 bedarfsweise vom Werkzeugkopf 18 des Handhabungsroboters 20 abschirmen können. Die beweglichen Barrieren 30 dienen insbesondere dazu, den Magazinplatz 28 oder 24, vom dem das betreffende Teilmagazin 16 oder 14 aus seiner jeweiligen Betriebsposition 22 entnommen und in die Entnahme- oder Wechselposition 26 gebracht wurde, so abzuschirmen, dass sich im Bereich dieses Magazinplatzes 28 oder 24 gefahrlos eine Person aufhalten oder dort hineingreifen kann, ohne dass dabei eine Kollision mit dem Werkzeugkopf 18 oder anderen beweglichen Teilen des Handhabungsroboters 20 droht.

Im gezeigten Ausführungsbeispiel wurde das rechte Teilmagazin 16 aus seinem zugehörigen zweiten Magazinplatz 28 herausbewegt und solchermaßen aus dem Magazin 12 entnommen, so dass es sich in seiner Entnahme- oder Wechselposition 26 befindet (vgl. Fig. 1C). Die Oberseite 32 dieses zweiten Magazinplatzes 28 ist durch die bewegliche Barriere 30 abgeschirmt. Hierzu ist eine zweiteilige schwenkbare Abdeckplatte 34, welche die rechtseitige bewegliche Barriere 30 bildet, in eine ungefähr horizontale Position gebracht, so dass sie den zweiten Magazinplatz 28 räumlich vom Bewegungsraum des Handhabungsroboters 20 abtrennt. Demgegenüber ist die zweiteilige schwenkbare Abdeckplatte 34, welche die linksseitige bewegliche Barriere 30 bilden, in eine vertikale Position gebracht, so dass die Oberseite 32 des in seiner Betriebslage 22 auf dem ersten Magazinplatz 24 befindlichen ersten Teilmagazins 14 frei zugänglich bleibt, so dass der Werkzeugkopf 18 des Handhabungsroboters 20 dort die im ersten Teilmagazin 14 gestapelten Verpackungszuschnitte entnehmen kann.

Die Teilmagazine 14 und 16 können wahlweise auf hier nicht näher erkennbaren Schienensystemen oder auf andere Weise zwischen ihrer jeweiligen Betriebsposition 22 und ihrer Entnahme- oder Wechselposition 26 bewegt und solchermaßen aus dem Magazin 12 der Verpackungsvorrichtung 10 herausbewegt werden, um sie mit neuen Stapeln von Verpackungszuschnitten bestücken zu können. Die Teilmagazine 14 und 16 können bspw. auch unterseitige Auszugplattformen 36 aufweisen, so dass sie in horizontaler Pfeilrichtung zum Betrachter hin (vgl. Fig. 1C), nach rechts (vgl. Fig. 1A) oder nach links (vgl. Fig. 1B) von ihrer jeweiligen Betriebsposition 22 in die für das zweite Teilmagazin 16 gezeigte Entnahme- oder Wechselposition 26 gebracht werden können.

Die beiden Teilmagazine 14 und 16 sind jeweils dafür vorbereitet, eine Vielzahl von flach übereinander gestapelten Verpackungszuschnitten aufzunehmen, so dass der mit geeigneten Greifwerkzeugen (hier nicht dargestellt) ausgestattete Werkzeugkopf 18 des Handhabungsroboters 20 einzeln die Verpackungszuschnitte oberseitig von den Stapeln abnehmen kann, um sie zu einem Applikationsbereich 38 zu verbringen, in dem die Verpackungszuschnitte jeweils an die hierfür bereitstehenden oder dort in Transportrichtung TR entlangbeförderten Artikelgruppierungen zu applizieren, so dass diese zu Verpackungseinheiten verarbeitet werden.

Das Magazin 12 befindet sich unmittelbar neben dem Applikationsbereich 38, wobei ein Bewegungsraum des Handhabungsroboters 20 sowohl das Magazin 12 mit den in Betriebspositionen 22 befindlichen Teilmagazinen 14 und/oder 16 als auch den Applikationsbereich 38 abdeckt. Die Figuren 1A bis 1C lassen zwei nebeneinander befindliche Handhabungsroboter 20 und 40 erkennen, wobei der bereits erwähnte erste Handhabungsroboter 20 räumlich dem Magazin 12 zugeordnet ist, während der daneben befindliche zweite Handhabungsroboter 40 in räumlicher Hinsicht dem Applikationsbereich 38 zugeordnet ist, wie dies insbesondere die Figuren 1A und 1B deutlich erkennen lassen. Vorzugsweise decken jedoch die jeweiligen Bewegungsräume beider Handhabungsroboter 20 und 40 sowohl das Magazin 12 als auch den Applikationsbereich 38 ab, so dass sie in parallelem Betrieb für eine hohe Verarbeitungsgeschwindigkeit sorgen können, wenn sie wechselseitig und unter Vermeidung von Kollisionen jeweils Verpackungszuschnitte aus einem der beiden Teilmagazine 14 oder 16 entnehmen und den mittels ihres jeweiligen Werkzeugkopfes 18 aufgenommenen Verpackungszuschnitt in den Applikationsbereich 38 überführen und dort auf eine Artikelgruppierung applizieren.

Die beiden Handhabungsroboter 20 und 40 sind im gezeigten Ausführungsbeispiel jeweils als Tripoden oder als Parallelkinematik-Roboter mit drei oberseitig an einem Rahmengestell 42 beweglich aufgehängten Knickarm-Paaren und unterseitig an diesen Knickarm-Paaren aufgehängtem Werkzeugkopf 18 ausgebildet. Wahlweise könnten die Handhabungsroboter 20 und 40 jedoch auch als Portalroboter oder als stehend positionierte Mehrgelenk-Knickarmroboter o. dgl. ausgebildet sein. Die Ausgestaltung als Parallelkinematik-Roboter hat jedoch den Vorteil, dass auf vergleichsweise engem Raum zwei solcher Handhabungsroboter 20 und 40 untergebracht werden können, deren Bewegungssteuerung so programmiert ist, dass ein Parallelbetrieb möglich ist, ohne dass die Werkzeugköpfe 18 oder die Arme der Roboter miteinander kollidieren.

Das gezeigte Rahmengestell 42 kann ein Modul einer Verpackungsmaschine bilden und die hier beschriebene Verpackungsvorrichtung 10 mitsamt allen Einzelelementen aufnehmen, wie dies hier beispielhaft gezeigt ist. Das Rahmengestell 42 ermöglicht zudem die oberseitige Aufhängung und Verankerung der beiden Handhabungsroboter 20 und 40 sowie die Verankerung der Auszugplattformen 36 für die beweglichen Teilmagazine 14 und 16 des Magazins 12 mit den darin verfügbar gehaltenen Verpackungszuschnitten.

Zudem überspannt das hier gezeigte Rahmengestelle 42 den Applikationsbereich 38, auf dem die mit Verpackungszuschnitten auszustattenden Artikelgruppierungen in Transportrichtung TR zu nachfolgenden Verarbeitungsmodulen der Verpackungsmaschine befördert werden, um bspw. zu palettierbaren Lagenanordnungen zusammengestellt und nachfolgend gestapelt und palettiert zu werden.

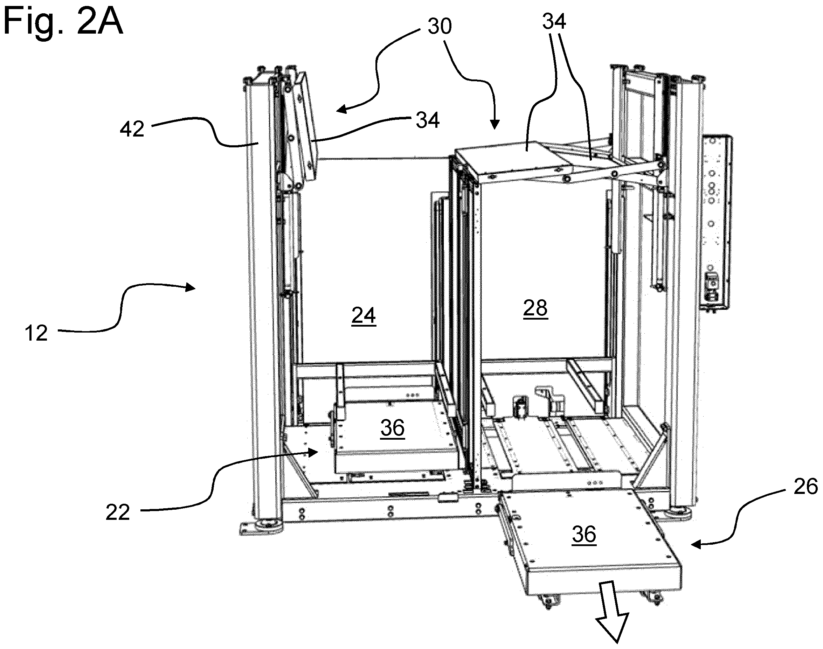

Die schematischen Ansichten der Figuren 2A bis 2C verdeutlichen die Funktion und die Wirkungsweise der beweglichen Barrieren 30, die bedarfsweise die Bewegungsräume der Handhabungsroboter 20 von den Magazinplätzen 24 und 28 abschirmen können, insbesondere wenn eines der beiden Teilmagazine 14 oder 16 aus seiner jeweiligen Betriebsposition 22 entfernt und in eine Entnahme- oder Wechselposition 26 gebracht ist, wie dies im gezeigten Ausführungsbeispiel für das zweite Teilmagazin 16 der Fall ist.

Die perspektivische Seitenansicht der Fig. 1C verdeutlicht diese Situation, bei der das rechts befindliche zweite Teilmagazin 16 mittels der beweglichen Auszugplattform 36 aus dem Magazin 12 herausbewegt wurde, so dass es für eine Neubefüllung mit gestapelten Verpackungszuschnitten zugänglich ist. Die perspektivische Seitenansicht der Fig. 2A zeigt nochmals dieselbe Ansicht, jedoch ohne die Teilmagazine 14 und 16 und ohne die beiden Handhabungsroboter 20 und 40 mitsamt ihrer Aufhängung am oberen Abschnitt des Rahmengestells 42.

Während sich dort die linke Auszugplattform 36 für das links befindliche erste Teilmagazin 14 an seinem ersten Magazinplatz 24 in der Betriebsposition 22 befindet, ist die rechte Auszugplattform 36 für das rechts befindliche zweite Teilmagazin 16 in horizontaler aus dem Magazin 12 herausgezogen, so dass sich dieses (hier nicht dargestellte) zweite Teilmagazin 16 in der Entnahme- oder Wechselposition 26 befindet.

Um bei der Handhabung, bei der manuellen oder teilautomatisierten Befüllung des außerhalb des Magazins 12 befindlichen zweiten Teilmagazins 16 jegliche Gefährdungen durch die beweglichen Teile des Handhabungsroboters 20 oder des daran aufgehängten Werkzeugkopfes 18 zu vermeiden, befinden sich die zweiteiligen Abdeckplatten 34 der rechtsseitigen beweglichen Barriere 30 in ihrer horizontalen Lage, so dass der zweite Magazinplatz 28 gegen den Handhabungsroboter 20 abgeschirmt ist und von einer Person betreten werden kann.

Auch sind manuelle Eingriffe in den räumlichen Bereich des zweiten Magazinplatzes 28 gefahrlos möglich, da auch bei fehlerhaften Bewegungsroutinen, bei welchen der Werkzeugkopf 18 des Handhabungsroboters 20 auf das zweite Magazin 16 zugreifen wollte, ein solcher Zugriff durch die aktivierte Barriere 30 zuverlässig verhindert werden kann.

Dagegen befinden sich die zweiteiligen Abdeckplatten 34 der linksseitigen beweglichen Barriere 30 in ihrer deaktivierten vertikalen Lage am Rand des Rahmengestells 42, wodurch der erste Magazinplatz 24 den Zugriffen des Werkzeugkopfes 18 des Handhabungsroboter 20 zur Verfügung steht. Somit sind keine manuellen Eingriffe in den räumlichen Bereich des ersten Magazinplatzes 24 möglich, da die Bewegungsroutinen, bei welchen der Werkzeugkopf 18 des Handhabungsroboters 20 auf das erste Magazin 14 zugreift, um dort Verpackungszuschnitte zu entnehmen, einen solchen Zugriff oder manuellen Eingriff aus Sicherheitsgründen nicht erlauben.

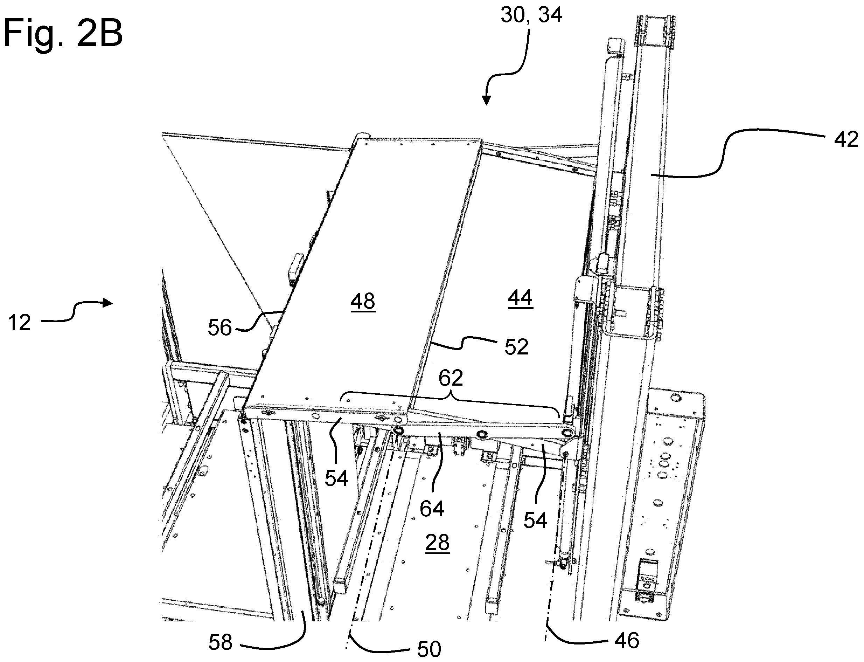

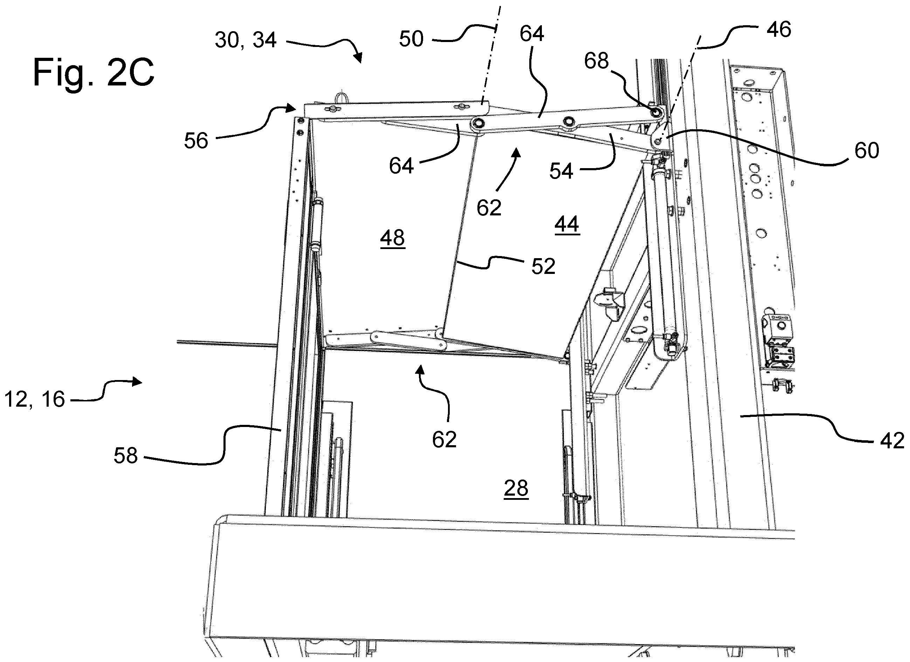

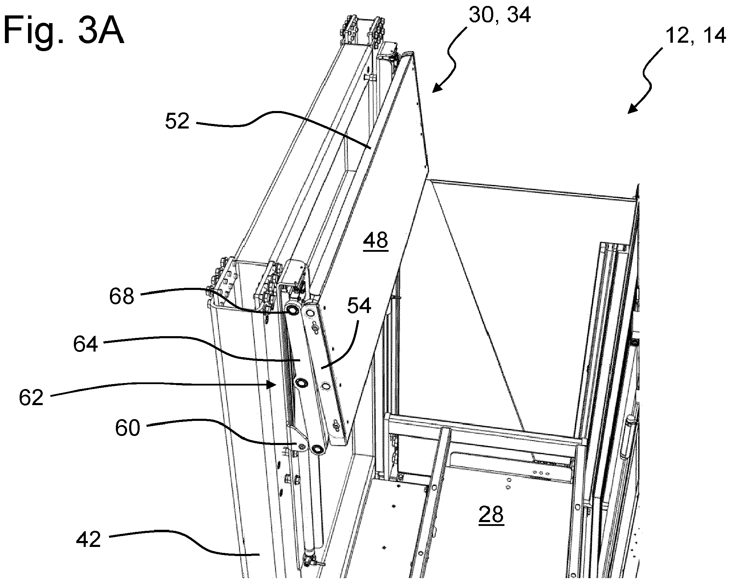

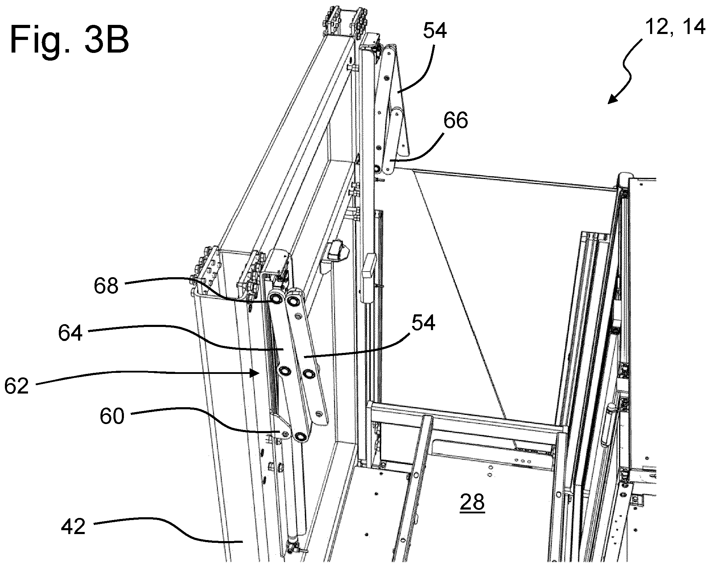

Die beiden perspektivischen Detailansichten der Figuren 2B und 2C verdeutlichen weitere konstruktive Einzelheiten der in die horizontale Lage gebrachten Abdeckplatten 34 der rechtsseitigen beweglichen Barriere 30, die auf diese Weise den zweiten Magazinplatz 28 gegen Zugriffe durch den Handhabungsroboter 20 abschirmt und solchermaßen manuelle Eingriffe auf das zweite Teilmagazin 16 und/oder dessen zweiten Magazinplatz 28 erlauben. Dagegen verdeutlichen die beiden perspektivischen Detailansichten der Figuren 3A und 3B weitere konstruktive Einzelheiten der in die vertikale inaktive Lage gebrachten Abdeckplatten 34 der linksseitigen beweglichen Barriere 30, die auf diese Weise den ersten Magazinplatz 24 nicht gegen Zugriffe durch den Handhabungsroboter 20 abschirmt, so dass auch manuelle Eingriffe auf das erste Teilmagazin 16 und/oder dessen ersten Magazinplatz 24 verwehrt sind.

Die perspektivische Detailansicht der Fig. 2B zeigt die aktivierte rechtsseitige Barriere 30 von schräg oben. Die perspektivische Detailansicht der Fig. 2C zeigt die aktivierte rechtsseitige Barriere 30 von schräg unten. Die in eine ungefähr horizontale Lage gebrachten zweiteiligen Abdeckplatten 34 bedecken die Oberseite 32 des zweiten Magazinplatzes 28 (vgl. Fig. 1C), so dass sich der Handhabungsroboter 20 mit seinem Werkzeugkopf 18 zwar oberhalb der solchermaßen ausgebildeten Barriere 30 bewegen kann, jedoch den Bereich unterhalb der Barriere 30 nicht erreicht.

Ein erster rechteckförmiger Abschnitt 44 der zweiteiligen Abdeckplatten 34 grenzt mit einer Längsseite an das Rahmengestell 42 und ist dort gelenkig gelagert, so dass sie um eine erste horizontale Schwenkachse 46, die sich nahe an vertikalen Streben des Rahmengestells 42 befindet, um einen Winkel von etwa 90° verschwenkt werden kann. Um als Barriere 30 zu fungieren und die Oberseite 32 des zweiten Magazinplatzes 28 abzudecken, befindet sich der erste rechteckförmige Abschnitt 44 der Abdeckplatte 34 in der in den Figuren 2B und 2C gezeigten ungefähr horizontal geneigten Lage.

Ein zweiter rechteckförmiger Abschnitt 48 der zweiteiligen Abdeckplatten 34 grenzt mit einer Längsseite an die vom Rahmengestell 42 abgewandten zweiten Längsseite des ersten Abschnittes 44 der Abdeckplatte 34 und ist dort ebenfalls gelenkig gelagert, so dass sie um eine zweite horizontale Schwenkachse 50, die sich knapp unterhalb einer Trennfuge 52 zwischen den aneinandergrenzenden Längsseiten der beiden Abschnitte 44 und 48 der Abdeckplatte 34 befindet, um einen Winkel von etwa 90° verschwenkt werden kann. Um als komplett ausgefaltete Barriere 30 zu fungieren und die Oberseite 32 des zweiten Magazinplatzes 28 abzudecken, befindet sich der zweite rechteckförmige Abschnitt 48 der Abdeckplatte 34 in der in den Figuren 2B und 2C gezeigten horizontalen Lage, so dass die beiden Abschnitte 44 und 48 in etwa in einer Ebene liegen und gemeinsam die zweiteilige Abdeckplatte 34 bilden.

Die beiden Abschnitte 44 und 48 sind in etwa gleich groß, wobei ihre Schmalseiten 54 jeweils eine Länge aufweisen, so dass sie aneinandergefügt die Breite des zweiten Magazinplatzes 28 überspannen. Ihre Längsseiten können in etwa der Tiefe der Teilmagazin 14 und 16 entsprechen.

Wie es die Figuren 2A bis 2C erkennen lassen, kann der zweite Abschnitt 48 im ausgefalteten Zustand in horizontaler Lage der zweiteiligen Abdeckplatte 34 mit einer endseitigen Längskante 56 oberseitig auf einer zwischen den beiden Magazinplätzen 24 und 28 befindlichen und die Magazinplätze 24 und 28 trennenden rahmenartigen Magazinwand 58 aufliegen. Diese Magazinwand 58 weist eine Höhe auf, die die jeweiligen Teilmagazine 14 und 16 leicht überragt, so dass die in horizontale Lage gebrachte Barriere 30 dort aufliegen kann.

Der Faltvorgang der zweiteiligen Abdeckplatte 34 um die beiden horizontalen Schwenkachsen 46 und 50 soll nachfolgend anhand der Figuren 2B, 2C, 3A und 3B in seinem Ablauf näher erläutert werden. So wurde die Schwenklagerung des ersten Abschnittes 44 der zweiteiligen Abdeckplatte 34 um die nahe am randseitigen Rahmengestell 42 befindliche erste horizontale Schwenkachse 46 bereits oben erwähnt.

Soll die bewegliche Barriere 30 an das Rahmengestell 42 angelegt werden, wie es die Figuren 3A und 3B für den linken Magazinplatz 24 zeigen, so kann der erste Abschnitt 44 an seiner dem Rahmengestell 42 zugewandten Längsseite um die erste horizontale Schwenkachse 46 nach oben verschwenkt werden. Am Rahmengestell 42 befinden sich hierzu zwei beabstandete Blechlaschen 60, die jeweils als Lager zum Verschwenken des ersten Abschnittes 44 nach oben dienen. An den Blechlaschen 60 ist der erste Abschnitt 44 an den Rändern seiner gegenüberliegenden Schmalseiten 54 gelenkig gelagert, so dass er um etwa 90° nach oben verschwenkt werden kann (vgl. hierzu die Fig. 3A).

An den vom Rahmengestell 42 abgewandten Rändern seiner gegenüberliegenden Schmalseiten 54 ist der zweite Abschnitt 48 am ersten Abschnitt 44 gelenkig gelagert, so dass der zweite Abschnitt 48 der zweiteiligen Abdeckplatte 34 gegenüber dem ersten Abschnitt 44 um die zweite horizontale Schwenkachse 50 um etwa 180° nach unten verschwenkt werden kann, wodurch er flächig am ersten Abschnitt 44 anliegt (vgl. Fig. 3A). Hierbei befindet sich die zuvor die Abdeckplatte 34 mittig unterteilende Trennfuge 52 oberhalb der beiden aneinandergelegten Abschnitte 44 und 48.

Der Faltvorgang wird durch einen an den Schmalseiten 54 der beiden Abschnitte 44 und 48 befindlichen Scherenmechanismus 62 ermöglicht. Während die erste horizontale Schwenkachse 46 aufgrund der ortsfest am Rahmengestell 42 verankerten Blechlaschen 60, die als Lagerstellen für den ersten Abschnitt 44 dienen, ihr Höhenniveau während eines Schwenkvorganges nicht verändert, sorgt der Scherenmechanismus 62 dafür, dass beim Verschwenken des ersten Abschnittes 44 von der horizontalen Lage (Figuren 2A bis 2C) in die vertikale Lage nach oben (Figuren 3A und 3B) der zweite Abschnitt 48 in gegensinniger Richtung nach unten verschwenkt und in der in Fig. 3A gezeigten Weise flächig an den ersten Abschnitt 44 angelegt wird. Hierdurch ist die Oberseite 32 des ersten Teilmagazins 14 in der in den Figuren 1A bis 1C gezeigten Weise freigelegt und für den Werkzeugkopf 18 des Handhabungsroboters 20 zugänglich gemacht.

Zwei lange Streben 64 befinden sich beidseitig an den Schmalseiten 54 des ersten Abschnittes 44. Diese langen Streben 64 weisen jeweils eine Länge auf, die in etwa den Längen der jeweiligen Schmalseiten 54 der Abschnitte 44 und 48 entspricht. Die langen Streben 64 sind in der horizontalen Lage der Abdeckplatte 34 knapp oberhalb der Blechlaschen 60, durch welche die erste horizontale Schwenkachse 46 verläuft, gelenkig gelagert und verankert.

Zudem sind die langen Streben 64 auf halber Länge jeweils mittig mit den beiden Schmalseiten 54 des ersten Abschnittes 44 gelenkig verbunden, während sie sich endseitig in kurzen Streben 66 fortsetzen, die am jeweiligen freien Ende der langen Streben 64 gelenkig gelagert sind.

Durch diese gelenkige Verbindung zwischen den freien Enden der langen Streben 64 und den kurzen Streben 66 verläuft die zweite horizontale Schwenkachse 50 sowie knapp oberhalb davon die Trennfuge 52 zwischen den aneinandergrenzenden Längsseiten der Abschnitte 44 und 48.

Mit den anderen Enden, die jeweils nicht mit den langen Streben 64 gelenkig verbunden sind, sind die kurzen Streben gelenkig in den Mitten der beiden Schmalseiten 54 des zweiten Abschnittes 48 gelagert.

Der Schwenkvorgang erfolgt durch vertikale Verschiebebewegungen der parallel zu vertikalen Streben des Rahmengestells 42 in der Höhe verschiebbaren Lagerstellen 68 der langen Streben 64. Während die Figuren 2A bis 2C die in einer unteren Lage knapp oberhalb der Blechlaschen 60 befindlichen Lagerstellen 68 der langen Streben 64 verdeutlichen, wodurch die langen Streben 64 leicht gegenüber einer Horizontalen nach unten geneigt sind, können die Lagerstellen 68 gemäß Figuren 3A und 3B nach oben verschoben und von den Blechlaschen 60 distanziert werden. Da die langen Streben 64 auf halber Länge jeweils mittig an den Schmalseiten 54 des ersten Abschnittes 44 angelenkt sind, ziehen sie diesen dadurch nach oben, bis er annähernd vertikal nach oben verschwenkt ist und dabei an das Rahmengestell 42 angelegt ist.

Da hierdurch die freien Enden der langen Streben 64 aufgrund deren gelenkiger Verbindung mit den Schmalseiten 54 des ersten Abschnittes 44 nach unten verschwenkt werden, distanziert sich die zweite horizontale Schwenkachse 50 von den Längsseiten der in der Trennfuge 52 aneinandergrenzenden Abschnitte 44 und 48. Die kurzen Streben 66 werden ebenfalls ausgelenkt und ziehen den zweiten Abschnitt 48 nach unten, da sie jeweils gelenkig in den Mitten der beiden Schmalseiten 54 des zweiten Abschnittes 48 gelagert sind.

Wenn die höhenverstellbaren Lagerstellen 68 an ihren jeweiligen oberen Anschlag nach oben verschoben sind, was bspw. mittels geeigneter Linearantriebe erfolgen kann, ergibt sich der gefaltete Zustand der beiden Abschnitte 44 und 48 der zweiteiligen Abdeckplatte 34, bei dem die beiden Abschnitte 44 in der in Fig. 3A gezeigten Weise aneinandergelegt sind und ungefähr vertikal nach oben verschwenkt sind, so dass der erste Magazinplatz 24 in der gezeigten Weise frei zugänglich ist, um dem Werkzeugkopf 18 des Handhabungsroboters 20 den Zugriff auf das bspw. in Fig. 1C deutlich erkennbare erste Teilmagazin 14 zu ermöglichen.

Die perspektivische Detailansicht von schräg oben der Fig. 3B verdeutlicht diese Schwenklage der beweglichen Barriere 30 ohne die beiden Abschnitte 44 und 48, die zur Verdeutlichung der Positionen der langen und kurzen Streben 64 und 66 weggelassen wurden.

Als Linearantriebe zur Höhenverstellung der beiden Lagerstellen 68 der langen Streben 64 eignen sich bspw. hydraulisch oder pneumatisch betätigbare Stellzylinder, wahlweise auch elektrische Linearmotoren, wobei für eine synchrone Ansteuerung zu sorgen ist, um störungsfreie Faltvorgänge gewährleisten zu können.

Ein abschließender Hinweis sei an dieser Stelle zu den Beschreibungen von Ausführungsvarianten der Erfindung gegeben, wobei diese Beschreibungspassagen jeweils auf die beigefügten Zeichnungen Bezug nehmen. Wenn im Zusammenhang der Figuren und deren Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Verpackungsvorrichtung 10 ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Verpackungsvorrichtung
- 12: Magazin
- 14: erstes Teilmagazin
- 16: zweites Teilmagazin
- 18: Werkzeugkopf
- 20: Handhabungsroboter, erster Handhabungsroboter
- 22: Betriebsposition, Betriebslage
- 24: erster Magazinplatz
- 26: Entnahmeposition, Wechselposition, Entnahme- oder Wechselposition
- 28: zweiter Magazinplatz
- 30: Barriere, bewegliche Barriere
- 32: Oberseite
- 34: Abdeckplatte, zweiteilige Abdeckplatte
- 36: Auszugplattform
- 38: Applikationsbereich
- 40: Handhabungsroboter, zweiter Handhabungsroboter
- 42: Rahmengestell
- 44: erster Abschnitt (der Abdeckplatte)
- 46: erste horizontale Schwenkachse
- 48: zweiter Abschnitt (der Abdeckplatte)
- 50: zweite horizontale Schwenkachse
- 52: Trennfuge
- 54: Schmalseite
- 56: endseitige Längskante
- 58: Magazinwand, rahmenartige Magazinwand
- 60: Blechlasche, Lagerstelle
- 62: Scherenmechanismus
- 64: Strebe, lange Strebe
- 66: Strebe, kurze Strebe
- 68: Lagerstelle (für lange Strebe)

- TR: Transportrichtung, Förderrichtung

## Patentansprüche

1. Verpackungsvorrichtung (10) zur Herstellung von Verpackungseinheiten durch Zusammenfassen von mindestens zwei Artikeln mittels eines applizierten Verpackungszuschnittes,
- mit mindestens einem Handhabungsroboter (20, 40), der auf wenigstens zwei in Reichweite eines beweglichen Werkzeugkopfes (18) des Handhabungsroboters (20, 40) befindliche Teilmagazine (14, 16) eines Magazins (12) mit jeweils darin bereitgehaltenen Verpackungszuschnitten zugreift, welche mittels des wenigstens einen Handhabungsroboters (20, 40) von dort entnehmbar und an jeweils bereitstehende Artikelgruppierungen applizierbar sind,
- wobei jeweils eines der Teilmagazine (14, 16) des Magazins (12) zur Wiederbefüllung nach einer Entnahme der dort verfügbar gehaltenen Verpackungszuschnitte unter Weiternutzung des jeweils anderen Teilmagazins (16 bzw. 14) zumindest teilweise aus einer Betriebsposition (22), insbesondere aus der Verpackungsvorrichtung (10) entnehmbar ist,
- und wobei das jeweils aus der Betriebsposition (22), insbesondere aus der Verpackungsvorrichtung (10) entnommene Teilmagazin (14, 16) und/oder der betreffende Magazinplatz (24, 28) zumindest temporär mittels einer beweglichen Barriere (30) vom Werkzeugkopf (18) des Handhabungsroboters (20, 40) abschirmbar ist/sind.

2. Verpackungsvorrichtung (10) nach Anspruch 1, bei der die bewegliche Barriere (30) einen vom Werkzeugkopf (18) des Handhabungsroboters (20, 40) abgeschirmten Bereich schafft, in dem sich das neu mit Verpackungszuschnitten zu bestückende Teilmagazin (14, 16) und/oder ein Magazinplatz (24, 28) für das neu mit Verpackungszuschnitten zu bestückende Teilmagazin (14, 16) befindet.

3. Verpackungsvorrichtung (10) nach Anspruch 1 oder 2, bei der die bewegliche Barriere (30) einen vom Werkzeugkopf (18) des Handhabungsroboters (20, 40) abgeschirmten Bereich schafft, der sich unterhalb eines Höhenniveaus des Handhabungsroboters (20, 40) befindet.

4. Verpackungsvorrichtung (10) nach einem der Ansprüche 1 bis 3, bei der die Teilmagazine (14, 16) und/oder die Magazinplätze (24, 28) für die Teilmagazine (14, 16) jeweils oberseitig mittels der beweglichen Barriere (30) abdeckbar sind, wenn diese zwischen den Handhabungsroboter (20, 40) und das Magazin (12) bzw. das Teilmagazin (14, 16) bewegt wurde.

5. Verpackungsvorrichtung (10) nach einem der Ansprüche 1 bis 4, bei der die bewegliche Barriere (30) durch mindestens eine Abdeckplatte (34) gebildet wird, die in einer horizontalen Schwenklage zumindest Bereiche des Magazins (12), insbesondere ein Teilmagazin (14, 16) und/oder einen der wenigstens zwei Magazinplätze (24, 28) vom Handhabungsroboter (20, 40) abschirmt.

6. Verpackungsvorrichtung (10) nach Anspruch 5, bei der jedem Teilmagazin (14, 16) und/oder Magazinplatz (24, 28) jeweils eine durch mindestens eine schwenkbare Abdeckplatte (34) gebildete bewegliche Barriere (30) zugeordnet ist.

7. Verpackungsvorrichtung (10) nach Anspruch 5 oder 6, bei der die mindestens eine Abdeckplatte (34) der beweglichen Barriere (30) in einem inaktiven Zustand zur Seite geschwenkt ist und das Magazin (12) und/oder das Teilmagazin (14, 16) für den Werkzeugkopf (18) des Handhabungsroboters (20, 40) zugänglich bleiben lässt.

8. Verfahren zur Versorgung einer Verpackungsvorrichtung (10) mit Verpackungszuschnitten, die insbesondere zur Herstellung von Verpackungseinheiten aus gruppierten Artikeln eingesetzt werden, welche Verpackungszuschnitt der Verpackungsvorrichtung (10) zur sequentiellen Entnahme aus einem Magazin (12) zur Verfügung gestellt werden,
- welches Magazin (12) mindestens zwei separate Teilmagazine (14, 16) für jeweils einen darin bereitgehaltenen Vorrat an Verpackungszuschnitten umfasst, wobei jedes einzelne Teilmagazin (14, 16) nach Entnahme der dort bevorrateten und der Verpackungsvorrichtung (10) verfügbar gehaltenen Verpackungszuschnitte unter Weiternutzung des jeweils anderen Teilmagazins (16 bzw. 14) wiederbefüllt werden kann, und
- wobei zumindest das wiederbefüllte Teilmagazin (14, 16) und/oder ein betreffender Magazinplatz (24, 28) mittels einer beweglichen Barriere (30) von beweglichen Handhabungseinrichtungen der Verpackungsvorrichtung (10) abgeschirmt wird/ werden.

9. Verfahren nach Anspruch 8, bei dem die beweglichen Handhabungseinrichtungen der Verpackungsvorrichtung (10) durch mindestens einen auf das Magazin (12) mit den Verpackungszuschnitten zugreifenden Handhabungsroboter (20, 40) gebildet werden, wobei der mindestens eine Handhabungsroboter (20, 40) der Verpackungsvorrichtung (10) jeweils einzeln oder paarweise Verpackungszuschnitte aus einem der Teilmagazine (14, 16) des Magazins (12) entnimmt und an jeweils bereitstehende Artikelgruppierungen appliziert, welche dadurch zu Verpackungseinheiten zusammengefasst werden.

10. Verfahren nach Anspruch 8 oder 9, bei dem die bewegliche Barriere (30) jeweils eines der Teilmagazine (14, 16) zumindest temporär von einem die Verpackungszuschnitte ergreifenden und aus dem jeweiligen Teilmagazin (14, 16) entnehmenden Werkzeugkopf (18) des Handhabungsroboters (20, 40) abschirmt, wobei die bewegliche Barriere (30) einen vom Werkzeugkopf (18) des Handhabungsroboters (20, 40) abgeschirmten Bereich schaffen kann, in dem sich das neu mit Verpackungszuschnitten zu bestückende Teilmagazin (14, 16) und/oder ein Magazinplatz (24, 28) für das neu mit Verpackungszuschnitten zu bestückende Teilmagazin (14, 16) befindet, und wobei die bewegliche Barriere (30) einen vom Werkzeugkopf (18) des Handhabungsroboters (20, 40) abgeschirmten Bereich schafft, der sich insbesondere unterhalb des Höhenniveaus des Handhabungsroboters (20, 40) befindet.

11. Verfahren nach Anspruch 10, bei dem die Teilmagazine (14, 16) und/oder die Magazinplätze (24, 28) für die Teilmagazine (14, 16) jeweils oberseitig mittels der beweglichen Barriere (30) abdeckbar sind, wenn diese zwischen den Handhabungsroboter (20, 40) und das Magazin (12) bzw. das Teilmagazin (14, 16) bewegt wurde.

12. Verfahren nach einem der Ansprüche 8 bis 11, bei dem die bewegliche Barriere (30) durch mindestens eine Abdeckplatte (34) gebildet wird, die in einer horizontalen Schwenklage zumindest Bereiche des Magazins (12) vom Handhabungsroboter (20, 40) abschirmt.

13. Verfahren nach Anspruch 12, bei dem die Abdeckplatte (34) in ihrer horizontalen Schwenklage zumindest ein Teilmagazin (14, 16) und/oder einen der wenigstens zwei Magazinplätze (24, 28) vom Handhabungsroboter (20, 40) abschirmt.

14. Verfahren nach Anspruch 12 oder 13, bei dem die mindestens eine Abdeckplatte (34) der beweglichen Barriere (30) in einem inaktiven Zustand zur Seite geschwenkt ist und das Magazin (12) und/oder das Teilmagazin (14, 16) für den Werkzeugkopf (18) des Handhabungsroboters (20, 40) zugänglich bleiben lässt.

15. Verfahren nach einem der Ansprüche 12 bis 14, bei dem die mindestens eine Abdeckplatte (34) mittig faltbar ist, wobei die Abdeckplatte (34) in ihrem inaktiven Zustand in einer Weise gefaltet ist, dass ihre beiden Hälften (44, 48) aneinander oder aufeinander gelegt und zur Seite geschwenkt sind, wobei die Abdeckplatte (34) oder die Abdeckplattenhälften (44, 48) insbesondere in eine ungefähr vertikale Schwenklage gebracht sind.

16. Verfahren nach einem der Ansprüche 12 bis 15, bei dem die mindestens eine Abdeckplatte (34) der beweglichen Barriere (30) aktuatorisch bewegt werden, insbesondere mittels elektrischer Stellantriebe, mittels fluidisch betätigter Stellzylinder o. dgl.
